Europäisches Patentamt

European Patent Office

Office européen des brevets

(11) Publication number: **0 341 033**
A2

# (12) EUROPEAN PATENT APPLICATION

(21) Application number: **89304428.9**

(22) Date of filing: **03.05.89**

(51) Int. Cl.⁴: **B 29 C 47/52**

(30) Priority: **04.05.88 GB 8810467**
**04.05.88 GB 8810468**
**23.11.88 GB 8827398**
**23.01.89 GB 8901435**

(43) Date of publication of application:
**08.11.89 Bulletin 89/45**

(84) Designated Contracting States:
**AT BE CH DE ES FR GB IT LI LU NL SE**

(71) Applicant: **UNITED KINGDOM ATOMIC ENERGY
AUTHORITY**
**11 Charles II Street**
**London SW1Y 4QP (GB)**

(72) Inventor: **Slater, Harold Keith**
**122 Spring Meadow**
**Clayton-le-Woods Preston PR5 2LY (GB)**

**Mackley, Malcolm Robert**
**32 Chesterton Hall Crescent**
**Chesterton Cambridge (GB)**

**Higgins, Ian**
**14 Alford Fold**
**Fulwood Preston PR2 3UU (GB)**

**Kennedy, Stephen Thomas**
**36 Fulwood Hall Lane**
**Fulwood Preston PR2 4DA (GB)**

**Coon, Peter Michael**
**Nearwood Preston Old Road**
**Clifton Preston PR4 0YB (GB)**

(74) Representative: **Alderman, John Edward et al**
**United Kingdom Atomic Energy Authority Patents Branch**
**B329 Harwell Laboratory**
**Oxfordshire, OX11 0RA (GB)**

(54) An extrusion process and apparatus therefor.

(57) A process for extruding polymer material, in which the material (18) is rapidly compacted and forced through an extrusion aperture (16). The rate of extrusion may be such as to cause rapid heating of the material (18) without melting of the material (18), followed immediately by cooling of the material (18) to retain to a substantial extent the molecular orientation in the material (18) as it passes through the aperture (16). The process is conveniently performed in Conform Apparatus (10, 10a) having an extended grip area for the material (18).

EP 0 341 033 A2

## Description

### An Extrusion Process and Apparatus Therefor

This invention relates to the extrusion of thermoplastic polymer material, and more particularly but not exclusively to the extrusion of ultra-high molecular weight polymer material (hereinafter referred to as "UHMWP").

UHMWP has proved to be an extremely difficult material to extrude from the solid, semi solid, or melt state because of its resistance to deformation, and this has meant in the past that UHMWP has had to be generally processed by high pressure ram extrusion or compression moulding techniques. In one of the known processes UHMWP is extruded in the gel state to form filaments which are subsequently drawn and then spun to form a high modulus high strength fibre. In another of the known processes, solid UHMWP is crystallised from the gel state, the solvent removed and the dried polymer ram extruded in a converging die at a temperature below the polymer's melting point. In this respect it has been shown that UHMWP that has previously been gel crystallized has both improved processing and end user properties. Nonetheless, there is still a need for an improved process whereby polymers in general and UHMWP in particular can be continuously processed in the solid, semi solid, and/or melt state.

Accordingly, the invention in a first aspect provides a process for extruding material comprising a thermoplastic polymer, the process comprising rapidly compacting and forcing the material through an aperture in a die means so as to extrude the material therethrough, said extrusion being below the melting point of the material.

According to a second aspect the invention provides a process for extruding material comprising a thermoplastic polymer, the process comprising, rapidly compacting and forcing the material through an aperture in a die means at a rate such as to cause rapid heating of the material but without melting of the material and relatively high longitudinal deformation of the material, followed immediately by rapid cooling of the material to consolidate to a substantial extent the molecular orientation associated with the longitudinal deformation in the polymer. Preferably, the rapid cooling is effected within the die means, and this may be assisted by having a die aperture with a length considerably greater than the diameter.

The polymer may comprise a polymer made from a normal melt processable molecular weight polymer (eg for polyethylene Mw: $\leq 500,000$) where Mw is the weight average molecular weight, or preferably UHMWP having a molecular weight of at least about 500,000, for example $1 \times 10^6$. Examples of such polymers are polyethylene, polypropylene, and PVC. Crystalline polymers are preferred but are not essential. The polymer may be extruded as a chosen profile or as a wire, rod, tube, or cladding about a core or vice versa. The improved optical quality of the extruded polymer might be such as to permit its use, for example, as a light guide. In some applications of the invention the material may be a composite material including a thermoplastic polymer.

In a preferred form of the invention, the process is performed continuously in Conform continuous extrusion apparatus described, for example, in British Patent Specifications Nos 1370894, 1434201, 1590776, 2028207A and 2176728A, and United States Patents Nos 3765216 and 4277968. Such apparatus comprises rotatable wheel means constituting a movable member and defining an endless groove around the wheel means for the material to be extruded, a shoe member overlying part of the length of the groove, a stationary abutment portion associated with the shoe member and projecting into the groove so as to substantially block a portion of the groove, and at least one die orifice associated with the abutment portion for extrusion of the material therethrough as the wheel means rotates, said apparatus being hereinafter referred to as "Conform Apparatus".

The invention, therefore, in a third aspect provides a continuous process for extruding a material comprising a thermoplastic polymer, the process comprising feeding the material into the groove of a rotating wheel means of a Conform Apparatus in which the peripheral velocity of the wheel means and the frictional driving force on the material in the groove is such as to effect rapid compaction of the material and subsequent forcing of the material through the die orifice.

Preferably, teeth or notches formed in the groove are disposed to bite into the material as the wheel rotates to enhance the forward drag of the material to the die orifice.

Preferably the material is rapidly heated by such rapid compaction and subsequent forcing through the die means, and advantageously cooling may be provided at the shoe member for rapid cooling of the material in the die means.

In yet a fourth aspect the invention provides a process for the continuous extrusion of thermoplastic polymer material, the process comprising feeding the polymer material into a groove of a Conform Apparatus having an extended grip area for the polymer material and extruding the polymer material through a die means of the Conform Apparatus, the temperature of the wheel at the grip area of the groove being maintained below the temperature at which the polymer material yields, and the temperature of the die means being maintained below the melting point of the polymer material.

Preferably, said temperature of the groove and of the die means are maintained at least in part by appropriate matching of the speed of the wheel, the geometry and orientation of the die means, and the length of the shoe member.

Finally in a fifth aspect of the invention, in apparatus for the continuous forming of material by extrusion, which apparatus comprises rotatable wheel means constituting a movable member and defining an endless groove around the wheel means for containing material to be extruded, a stationary shoe member adapted to overlie part of the length of the groove, an abutment portion associated with the shoe member and adapted to project into the groove so as to substantially block a portion of the groove, and at least one die orifice associated with the shoe member or the abutment portion, for the extrusion therethrough of the material in the groove as the wheel means rotates, the shoe member extends along a substantial portion of the periphery of the groove so as to provide an extended grip area of the groove for a plastics feedstock.

Preferably, the shoe member for a 320mm outside diameter wheel means extends for at least 153° around the periphery of the groove. Desirably, the die orifice extends in a substantially radial direction with respect to the wheel. Advantageously, a relatively thin metal layer is provided on the groove, so as to provide a seal and improve the grip on said plastics feedstock. Preferably, the layer comprises a relatively soft metal having an inherently high coefficient of friction, for example aluminium. The layer may have a multiplicity of transverse cracks therein to enhance the grip on the plastics material.

Use of the process of the invention may allow a highly directional orientation to be achieved, which imparts stiffness and enhanced strength in the extruded polymer.

The invention will now be further described by way of example only with reference to the accompanying drawings in which:

Figure 1 shows a side view in part section of a Conform Apparatus for the continuous forming of materials by extrusion;

Figure 2 shows a modification of the Apparatus of Figure 1;

Figures 3, 3a and 3b show another modification of the apparatus of Figure 1;

Figure 4 shows a fragmentary sectional view to an enlarged scale on the line IV-IV of Figure 3;

Figure 5 shows a fragmentary view to an enlarged scale in the direction of arrow A of Figure 4;

Figure 6 shows an elevation of a wheel member; and

Figure 7 shows a section on the line A-A of Figure 6.

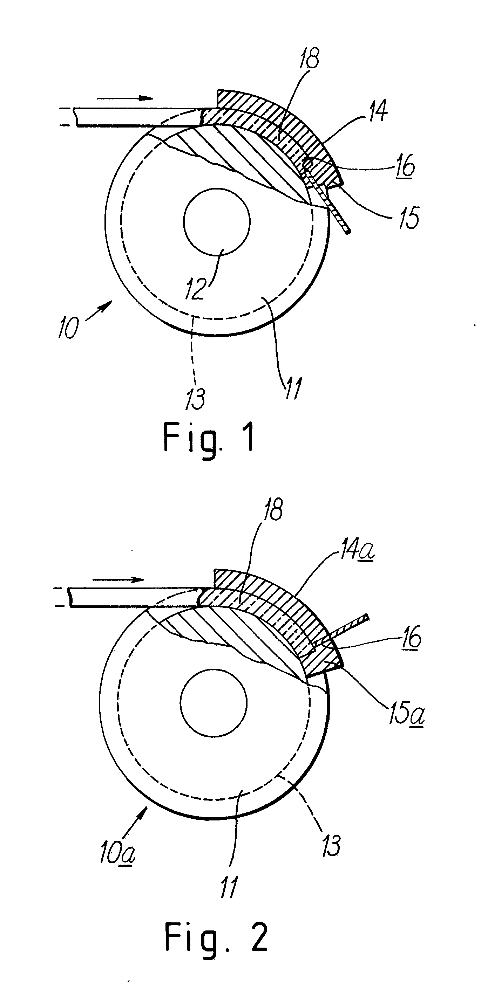

Referring now to Figure 1, an extrusion apparatus 10 is shown of the kind described in the aforementioned Patent Specifications which are incorporated by reference herein. The apparatus 10 comprises a wheel 11 rotatably mounted on a shaft 12. The wheel 11 has an endless circumferential groove 13 around its outer edge, and a shoe member 14 overlies part of the length of the groove 13. An abutment portion 15 associated with the shoe member 14 is shaped so as to project into and substantially block the groove 13. The abutment portion 15 has an extrusion orifice 16 through which material 18 (eg UHMWP of about $1 \times 10^6$ molecular weight) in the groove 13 is extruded as the wheel 11 rotates.

In operation, as the wheel 11 rotates the material 18 in the groove 13 is carried forward by the frictional drag of the walls of the groove 13 and forced against the abutment portion 15. Pressure is thus generated in the material 18 so that it is rapidly compacted and forced through the orifice 16. This causes rapid heating of the material 18 and longitudinal orientation in the orifice 16. The heat sink provided by the shoe member 14 cools the material 18 almost immediately as it passes through the orifice 16 to an extent such as to substantially retain the desired longitudinal orientation in the extruded material 18. The apparatus 10 of Figure 1 has the orifice 16 located in the abutment portion 15 such that the material 18 is extruded tangentially with respect to the wheel 11. However, as shown in Figure 2, an orifice 16 may be located in a shoe member 14a associated with an abutment portion 15a in an apparatus 10a, so that the material 18 extrudes radially through the orifice 16 with respect to the wheel 11. In other respects the apparatus 10a of Figure 2 is the same as the apparatus 10 of Figure 1. The orifice 16 of Figure 1 or Figure 2 for extruding polymer material may have a specific geometry and may be of extended length, for example three times greater than the diameter of the orifice 16, or 10:1 or higher. The shoe member 14, 14a may be of composite construction, and preferably includes cooling means (not shown) to assist in the rapid cooling of the material 18 as it passes through the aperture 16.

The material 18 might be a normal melt processable thermoplastic polymer, or UHMWP of at least 500,000 molecular weight, examples being polyethylene, polypropylene or PVC. The feedstock material 18 to be fed into the groove 13 might be, for example, polymer rod or composite material 18. Powdered material 18 such as polymer direct from a polymerization reactor should be capable of being extruded, and advantageously the shoe member 14, 14a should define a space converging towards the abutment portion 15, preferably of at least 30% reduction, for example 50% reduction in cross-sectional area, to provide an initial compaction of the powder.

In view of the difficulties experienced in extruding UHMWP in the past, its successful extrusion in the apparatus 10 of Figures 1 or 2 is surprising. This may be due to some extent to the high frictional driving force generated between the material 18 and the walls of the groove 13 in a Conform apparatus, the stress distribution generated within the die orifice 16, and the thermal profile of the material 18 as it passes through the apparatus 10.

It will be appreciated that the invention provides a continuous process for forming a thermoplastic polymer into shaped extrusion profiles, and such extruded profiles may have improved properties. The invention also includes a polymer extruded by the process of the invention. The continuous process of the invention may have particular advantages for forming thermoplastic UHMWP polymer material in the shaped extrusion profiles, and such extruded profiles may also have improved properties. It should be further understood that the invention provides a continuous process for forming composite material including a thermoplastic polymer into shaped extrusion profiles, and such extruded profiles may have improved properties.

From the foregoing it will be appreciated that the process of the invention particularly in conjunction with the Conform Apparatus may be used for the extrusion of a number of materials comprising thermoplastic polymers, including composite materials. The inclusion of additives to the polymer in the form, for example, of lubricant, plasticizer, fibres, and/or solid particulates may be made for subsequent extrusion of the composite material. Some orientation of the fibres may result. One advantage of the invention is that the polymer may be extruded with a relatively high degree of precision with respect to its surface dimensions. The invention may also be effective with "low entanglement" high molecular weight polymers which are manufactured direct from polymerisation.

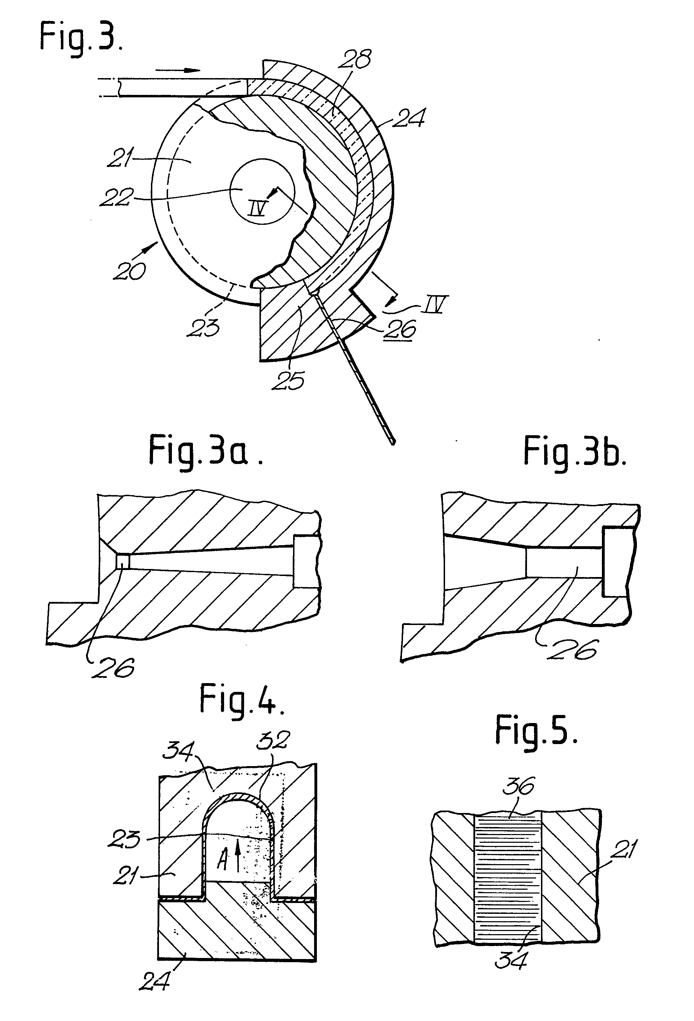

Referring now to Figure 3, a modified Conform Apparatus 20 is shown having a wheel 21 rotatably mounted on a shaft 22. The wheel 21 has an endless circumferential groove 23 around its outer edge, and a shoe member 24 overlies a substantial portion of the length of the groove 23 to provide an extensive grip area of the groove 23 for material 28 to be extruded. An abutment portion 25 is associated with the shoe member 24 and blocks at least a substantial portion of the width of the groove 23. The abutment portion 25 has an extrusion orifice 26 which extends radially wth respect to the wheel 21. The circumferential length of the shoe member 24 from the open end 29 to the die orifice 26 subtends an angle of about 153° with respect to the wheel 21. Hence, the net grip or driving area presented by the groove 23 to a material to be extruded is enhanced compared with the known Conform apparatus of Figures 1 or 2. Examples of suitable die orifice 26 geometries are shown in Figures 3a and 3b. In Figure 3a, a 90° inclusive entry portion is followed by a short parallel section, and a long reverse tapered portion of relatively small included angle. In Figure 3b, a long tapered entry portion is followed by a parallel portion.

The groove 23 as shown in Figure 4 has a semi-circular base 32. A thin layer 34 of aluminium (shown to an enlarged scale for clarity) deposited on the groove 23 and between the wheel 21 and the shoe member 24 provides a seal, and a multiplicity of minute transverse grooves or cracks 36 (see Figure 4) in the layer 34 provide an enhanced grip for the material 28.

In operation, as the wheel 21 rotates a plastics material 28 such as ultra high molecular weight (UHMW) polyethylene rod is carried forward by the frictional drag of the walls of the groove 23 and forced against the abutment portion 25. Pressure is thus generated in the material 28 so that it is forced through the die orifice 26. Heat is generated by the extrusion of the material 28, but the proportions of the groove 23 and the extended shoe member 24 together with the speed of the wheel 21, ensure that along a major portion of the shoe member 24 the temperature of the material 28 is below the yield point, and that the material 28 extruding through the elongate die orifice 26 is below the melting point of the material 28.

EXAMPLE I

Material - UHMW polyethylene rod 12.7 mm diameter supplied by: Perplas Limited, Bacup, Lancashire, OL13 9EF, United Kingdom. Conform Apparatus - Wheel 320 mm outside diameter
- Shoe length from entry to die orifice - 153°
- Groove - l6mm depth x l2mm wide, with shoe member extending 4mm into the groove to provide a mean groove depth of l2mm for the plastics material. Extremely thin layer of aluminium at base and sides of groove with multiplicity of transverse grooves or cracks.
Die orifice, of Figure 3b: 12mm entry diameter, tapering over 20mm to 8mm diameter x 20mm long parallel section.
Die preheat: 50°C.
Wheel speed: 3.0 revolutions per minute (linear speed at base of groove 2714mm/min).

The plastics rod was fed into the groove, and a continuous length of UHMW product was extruded. The measured temperature of the die stabilised at about 50°C, the abutment at about 90°C, and the wheel at the entry to the shoe member at about 35°C, although these measured temperatures may be below the actual temperatures inside the die and the shoe member.

EXAMPLE II

EXAMPLE I was repeated without a die preheat, and using an alternative die orifice of Figure 3a, viz:
10mm entry diameter and 90° inclusive entry angle, followed by a 4mm diameter x 3mm long parallel section, and an exit reverse taper to 5mm diameter over a 41mm length.

The plastics rod was fed into the groove, and a continuous length of product was satisfactorily extruded.

EXAMPLE III

EXAMPLE I was repeated but using BP Chemicals "Rigidex" H02054P High Density Polyethylene feedstock. A continuous length of extruded product was produced.

EXAMPLE IV

EXAMPLE II was repeated but using the Rigidex High Density Polyethylene feedstock, and 60°C die preheat. A continuous extruded product was produced.

Although a circular plastics rod was used some other cross-section might be used such as square. Granular plastics material might also be extruded, but it may be necessary to extend the length of the shoe member even further to provide a longer chamber in which compaction can take place.

The aluminium layer was deposited by initially extruding aluminium in a Conform apparatus with an undersize abutment, and subsequently "shaving" the aluminium with the correct size abutment so as to produce an extremely close fit. The transverse cracks were produced by the "shaving" during this initial extrusion process.

The pre-heating of the die and the shoe member may be advantageous in some instances in reducing the pressure necessary to initiate extrusion of the material. Subsequently, cooling of the die and possibly the shoe member may be necessary to maintain the temperature thereof below the melting point of the material being extruded. It may be necessary to cool the wheel in the general area of the groove to maintain the walls of the groove below the temperature at which the material to be extruded yields. Such heating and cooling is conveniently performed by conventional heating and cooling ducts (not shown) therein or tubular coils (not shown) thereabout and through which a heating or cooling fluid may be passed. It will be appreciated that other heating and cooling means may be used.

Alternative wheel speeds may be used, eg 1.75 rpm and 4.5 rpm depending on the material to be extruded and the extrusion ratio, but 3 rpm was found to be the optimum speed for a wheel of 320mm diameter.

Alternative plastics materials may be extruded at alternative die orifice diameters, lengths, and geometries, and different groove sizes may be used. It is advantageous for the rod material to be an interference fit in the groove to initiate a firm grip on the material.

Use of the aforesaid Conform Apparatus of Figures 3 to 5 permits relatively quick processing to size of materials such as UHMW polymers which are difficult to work. The use of low extrusion ratios (eg 2.5) combined with a suitable die orifice geometry, are preferred to give a satisfactory stable extrusion, although some enhancement of the stiffness of such materials might result from the use of higher extrusion ratios. In this respect the plastics polymer material might be extruded below the melting point of the plastics material through successive die orifices of decreasing cross-section of Conform Apparatus, and this may enhance the stiffness of the finally extruded plastics polymer material.

In order to enhance the grip and forward drag and reduce slippage of the plastics material in the groove of the Conform Apparatus, teeth or notches might be formed in the groove and disposed to bit into the plastics material as the wheel rotates.

The teeth or notches can be in the base of the groove or in the side walls of the groove or in both the base and the side walls. The teeth or notches can be formed by a ball-ended cutter with the teeth or notches in the base of the groove being disposed across the groove and parallel to the axis of rotation of the wheel member and the teeth or notches in the side walls extending in a radial direction. However, other arrangements or patterns are possible. For example, the teeth or notches in the base can be V-shaped with the apex of each tooth or notch at the centre of the groove.

On start-up during extrusion, feedstock material introduced into a clean groove in the wheel is drawn by frictional drag towards the abutment at the end of the passageway formed by the overlying shoe for extrusion through the die orifice or orifices. The drive applied to the feedstock material is enhanced by means of the teeth or notches in the groove which bite into the material and provide a mechanical key between the material and the wheel groove. A certain amount of the feedstock material drawn towards the abutment by the rotating wheel will pass through the clearance between the abutment and the groove. The teeth or notches in the groove serve the additional function of providing a key for the retention of the feedstock material passing the abutment in the groove. As extrusion proceeds, a tyre or lining of feedstock material develops in the groove during continued rotation of the wheel and this tyre or lining further increases the grip available to the incoming feedstock material.

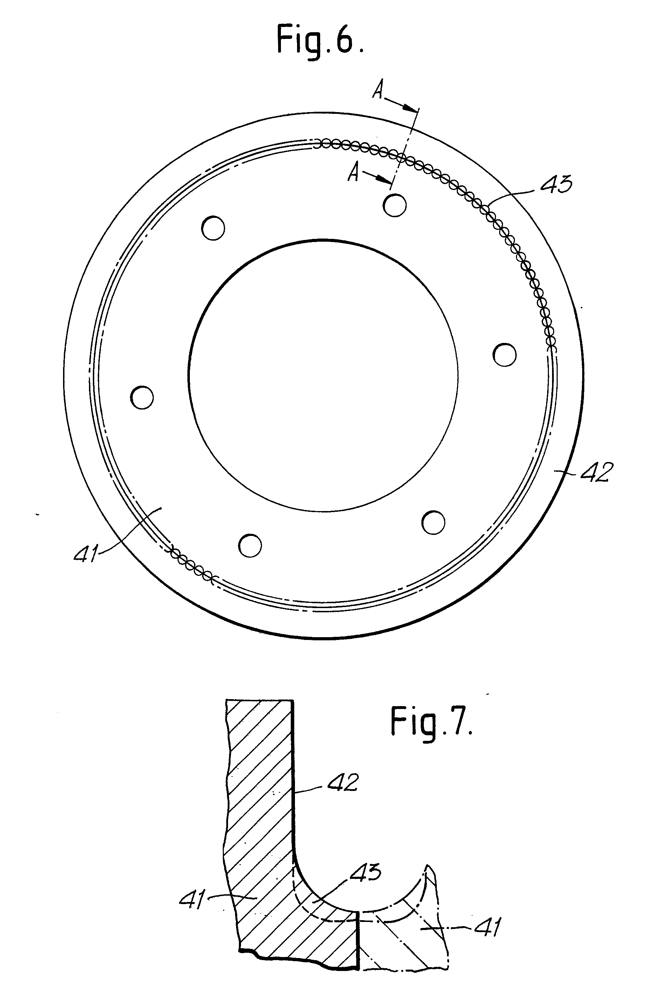

An example of such a wheel member is illustrated in Figures 6 and 7 to which reference is now made. In the Figures a wheel member 41 is formed with a continuous peripheral groove 42, a mating wheel member 41 being shown in phantom outline. A plurality of notches 43 are formed, conveniently by a ball-ended cutter, at the junction of the side wall and the base of the groove 42. The notches 43 extend the complete periphery of the groove 42. A wheel for extrusion in a Conform Apparatus comprises two juxtaposed wheel members 41 secured together by conventional means for rotation.

To reduce the friction at the undersurface of the stationary shoe member and which friction opposes the forward drag applied to the feedstock material by the rotating wheel, the undersurface can be lubricated or otherwise treated prior to commencement of extrusion. For example, a coating of a low friction material such as PTFE can be applied to the shoe undersurface.

## Claims

1. A process for extruding material comprising a thermoplastic polymer, characterised by rapidly compacting and forcing the material (18) through an aperture in a die means (16) so as to extrude the material (18) therethrough, said extrusion being below the melting point of the material (18).

2. A process as claimed in Claim 1, wherein said compacting and said forcing of the material (18) causes relatively high deformation of the material (18).

3. A process for extruding material comprising a thermoplastic polymer, characterised by rapidly compacting and forcing the material (18) through an aperture in a die means (16) at a rate such as to cause rapid heating of the material (18), but without melting of the material (18), and relatively high longitudinal deformation of the material (18), followed immediately by rapid cooling of the material (18) to consolidate to a substantial extent the molecular orientation associated with the longitudinal deformation in the material (18).

4. A process as claimed in Claim 3, wherein the rapid cooling is effected within the die means (16).

5. A continuous process for extruding a material comprising a polymer material, characterised by feeding the material (18) into a continuous extrusion apparatus (10, 10a:), the apparatus (10, 10a) comprising, rotatable wheel means (11) constituting a movable member and defining an endless groove (13) around the wheel means (11) to receive the material (18) to be extruded, a shoe member (14) overlying part of the length of the groove (13), a stationary abutment portion (15) associated with the shoe member (14) and projecting into the groove (13) so as to substantially block a portion of the groove, and at least one die aperture (16) associated with the abutment portion (15) for extrusion of the material (18) therethrough as the wheel means (11) rotates, the peripheral velocity of the wheel means (11) and the frictional driving force on the material (18) in the groove (13) being such as to effect rapid compaction of the material (18) and subsequent forcing of the material (18) through the die aperture (16).

6. A process as claimed in Claim 1 or Claim 5, wherein said compacting and said forcing of the material (18) is at such a rate as to cause rapid heating of the material (18) without melting of the material (18).

7. A process as claimed in Claim 6, including rapidly cooling the material (18) in the die aperture (16) to retain to substantial extent the molecular orientation produced in the material (18) in the die aperture (16).

8. A continuous process for extruding a material comprising a thermoplastic polymer, characterised by feeding the material (18, 28) into a groove of a Conform Apparatus (10, 10a, 20) having an extended grip area for the material (18, 28) and extruding the material (18, 28) through a die means (16, 26) of the Conform Apparatus (10, 10a, 20), the temperature of the wheel (11, 21) at the grip area of the groove (13, 23) being maintained below the temperature at which the material yields (18, 28), and the temperature of the material (18, 28) in the die means (16, 26) being maintained below the melting point of the material (18, 28).

9. A process as claimed in Claim 8, wherein said temperature of the groove (13, 23) and of the die means (16, 26) are maintained at least in part by appropriate matching of the speed of the wheel (11, 21), the orientation of the die means (16, 26), and the length of the shoe member (14, 24).

10. A process as claimed in any one of the preceding Claims, wherein the linear speed at the base of the groove (13, 23) is about 2714 mm/min.

11. A process as claimed in any one of the preceding Claims, wherein the geometry of the die aperture (26) is defined by a 90° entry portion, followed by a relatively short parallel portion, and then a relatively long reverse taper portion of relatively small included angle.

12. A process as claimed in any one Claims 1 to 10, wherein the geometry of the die aperture (26) is defined by a tapered entry portion, followed by a parallel portion, the entry portion and the parallel portion being of substantially the same length.

13. A process as claimed in any one of the preceding Claims, wherein the polymer material (18, 28) comprises a normal melt processable molecular weight polymer having a molecular weight $M \leq 500,000$, or UHMWP having a molecular weight $M$ greater than 500,000.

14. A process as claimed in any one of the preceding Claims, wherein the polymer material (18, 28) comprises rod.

15. A process as claimed in any one of the preceding Claims, wherein the polymer material (18, 28) comprises composite material.

16. A process as claimed in Claim 15, wherein the composite material includes additives in the form of a lubricant, or a plasticizer, or fibres, or solid particulates, or a mixture thereof.

17. A process as claimed in Claim 15 or 16, wherein the composite material comprises polymer material and an elongate core material, whereby said polymer material is extruded about the core material.

18. A process as claimed in any one of the preceding Claims, and further characterised by extruding the polymer material through a succession of die orifices of decreasing cross-sectional area.

19. A process as claimed in any one of the preceding Claims, wherein said extrusion is performed at an extrusion ratio of about 2.5.

20. An extrusion comprising polymer material extruded by the process as claimed in any one of Claims 1 to 19.

21. An extrusion as claimed in Claim 20 and in the form of wire, rod, or tube, or other shaped extrusion profile, or comprising a cladding about a core.

22. The use as a light guide of an extrusion as claimed in Claim 20 or 21.

23. Apparatus for extruding a material comprising a thermoplastic polymer, characterised by a Conform Apparatus (10, 10a) in which teeth (43) or notches formed in the groove (42) are disposed to bite into the material (18) as the wheel (41) rotates to enhance the forward drag of the material (18) to the die orifice (16).

24. Apparatus for the continuous forming of material by extrusion, which apparatus comprises rotatable wheel means (21) constituting a movable member and defining an endless groove (23) around the wheel means (21) for containing material (28) to be extruded, a stationary shoe member (24) adapted to overlie part of the length of the groove (23), an abutment portion (25) associated with the shoe member (24) and adapted to project into the groove (23) so as to substantially block a portion of the groove (23), and at least one die orifice (26) associated with the shoe member (24) or the abutment portion (25), for the extrusion therethrough of the material (28) in the groove (23) as the wheel means (21) rotates, characterised in that the shoe member (24) extends along a substantial portion of the periphery of the groove (23) so as to provide an extended grip area of the groove (23) for a plastics material (28).

25. Apparatus as claimed in Claim 24 wherein the wheel means is about 320mm outside diameter and the shoe member (24) extends for at least 153° around the periphery of the groove (23).

26. Apparatus as claimed in Claim 23, 24 or 25, wherein the die orifice (16, 26) extends in a substantially radial direction with respect to the wheel (11, 21).

27. Apparatus as claimed in any one of Claims 23 to 26, wherein a relatively thin metal layer (34) is provided on the groove (23).

28. Apparatus as claimed in Claim 27, wherein said layer (34) has a multiplicity of transverse grooves or cracks therein so as to improve the grip on said plastics material (28).

29. Apparatus as claimed in Claim 27 or 28, wherein the layer (34) comprises a relatively soft metal having an inherently high coefficient of friction.

30. Apparatus as claimed in any one of Claims 24 to 29, wherein teeth (43) or notches are formed in the groove (23).

31. Apparatus as claimed in any one of Claims 23 to 30, wherein the geometry of the die aperture (26) is defined by a 90° entry portion, followed by a relatively short parallel portion, and then a relatively long reverse taper portion of relatively small included angle.

32. Apparatus as claimed in any one of Claims 23 to 30, wherein the geometry of the die aperture (26) is defined by a tapered entry portion, followed by a parallel portion, the entry portion and the parallel portion being of substantially the same length.

33. Apparatus as claimed in any one of Claims 23 to 32, wherein means are provided for controlling the temperature of the shoe member (14, 24) and/or the wheel (11, 21).

34. Apparatus as claimed in any one of Claims 23 to 33, wherein the apparatus (10, 10a, 20) is adapted to rotate the wheel (11, 21) to provide a linear speed of about 2714 mm/min at the base of the groove (13, 23).

Fig. 1

Fig. 2

Fig. 3.

Fig. 3a.

Fig. 3b.

Fig. 4.

Fig. 5.

## Fig.6.

A — A
43
42
41

## Fig.7.

42
43
41
41